# EUROPÄISCHE PATENTANMELDUNG

(11) **EP 0 713 747 A1**
(43) Veröffentlichungstag der Anmeldung: **29.05.1996**
(21) Anmeldenummer: 95118189.0
(22) Anmeldetag: 18.11.1995
(51) Int. Cl.: B23P 15/46, B23P 5/00, B23D 77/02

(54) **Verfahren zur Herstellung von Rohlingen für Führungsleisten für Einschneiden-Reibahlen und zum Finishen von Einschneiden-Reibahlen**

(30) Priorität: 23.11.1994 DE 4441648
(71) Anmelder: August Beck GmbH & Co., D-72474 Winterlingen (DE)
(72) Erfinder: Basteck, Andreas Dr., D-79117 Freiburg (DE)
(74) Vertreter: Kinkelin, Ulrich, Dipl.-Ing.

(57) **Zusammenfassung**

Bei dem Verfahren zur Herstellung von Rohlingen (24) für Führungsleisten für Einschneiden-Reibahlen wird der Schneidstoff in Form des Führungsleisten-Grundkörpers (20) geschliffen und der geschliffene Grundkörper (20) in einer CVD-Anlage wenigstens teilweise mit einer Diamant und/oder Bornitrid-Schicht (22) beschichtet. Bevorzugte Schneidstoffe sind keramische Materialien, insbesondere Siliziumnitrid. Der Rohling (24) wird anschließend in die Nut des Schneidenkopfes eingesetzt und auf Rundmaß geschliffen.

Die aus einem keramischen Grundkörper mit einer Diamant- und/oder kubischen Bornitridbeschichtung bestehenden Führungsleisten zeichnen sich durch eine gute Haftung der Beschichtung an dem Grundkörper, eine hohe Temperaturbeständigkeit, einen geringen Verschleiß und sehr gute Führungseigenschaften aus, so daß die Einschneiden-Reibahlen mit einer hohen Geschwindigkeit betrieben werden können und sie sogar zum Trockenreiben einsetzbar sind.

## Beschreibung

Die Erfindung betrifft eine Verfahren zur Herstellung von Rohlingen für Führungsleisten für Einschneiden-Reibahlen, ein Verfahren zum Finishen von Einschneiden-Reibahlen sowie Führungsleisten und Einschneiden-Reibahlen.

Einschneiden-Reibahlen, bei welchen die Zerspanungs- und Führungselemente getrennt sind, dienen zur Feinbearbeitung von Bohrungen in Werkstücken. Die Zerspanung erfolgt mit der Schneide. Die Führung des Werkzeugs in der Bohrung wird durch wenigstens eine Führungsleiste übernommen, wobei die Führungsleiste ebenfall dazu dient, die Bohrungsoberfläche zu glätten.

Schwierigkeiten bestehen darin, daß infolge der Reibung der Außenfläche der Führungsleiste an der Bohrungswand verschiedene Störeffekte auftreten können, die dann eine Ungenauigkeit der Führung bis hin zu frühem Verschleiß der Führungsleiste verursachen. Der Störeinfluß der Reibung kann zwar durch eine die Bohrung durchspülende Kühlflüssigkeit, die üblicherweise ein Schmiermittel enhält, reduziert werden. Wegen der aufwendigen Entsorgung des Kühlmittels und der Kosten besteht jedoch das Bestreben, den Zusatzanteil möglichst weitgehend zu reduzieren.

Ein besonders bevorzugtes Material für Führungsleisten ist aufgrund seiner besonderen Härte und seiner sonstigen Eigenschaften Diamant. Die Herstellung von Führungsleisten aus Diamant scheidet jedoch aus Kostengründen aus.

In der DE 42 02 751 A1 wird eine Führungsleiste vorgeschlagen, die wenigstens teilweise im Bereich der Anlagefläche aus Diamant besteht.

Die bekannten diamantbeschichteten Führungsleisten werden hergestellt, indem auf den Führungsleisten-Grundkörper aus Hartmetall eine polykristalline Diamantauflage (PKD) aufgesintert wird. Die Führungsleiste wird dann anschließend in die entsprechende Nut des Messerkopfes eingelötet und ggfs. auf Maß geschliffen.

Die PKD-Schichten sind polykristallin und enthalten als Bindemittel Kobalt. Durch die extrem harte Diamantbeschichtung werden die unerwünschten Störeinflüsse vermindert und die Aufschweißerscheinungen reduziert.

Durch das Löten ist die Führungsleiste jedoch zum einen nicht mehr auszuwechseln und zum andern führt die zum Löten notwendige Temperatur leicht dazu, daß sich der Messerkopf versieht.

Es hat sich weiterhin herausgestellt, daß sich in der PKD-Schicht bei Temperaturen ab 500° C infolge der sehr unterschiedlichen Wärmeausdehnung von Diamant und Kobalt Mikrorisse bilden und Kobalt bei Temperaturen ab 700°C die Umwandlung des Diamantgitters in das Graphitgitter katalysiert.

Durch die unterschiedlichen Wärmeausdehnungskoeffizienten von PKD und Hartmetall kommt es in Verbindung mit der hohen Wärmeleitfähigkeit des PKD zu Scherspannungen an der Grenze zwischen PKD und Hartmetall, so daß die Haftung vermindert wird, was bis zur Delaminierung führen kann.

Ein weiterer Nachteil der bekannten diamantbeschichteten Führungsleisten besteht in den hohen Kosten für die PKD-Einsätze. Die bekannten PKD-Auflagen sind 5 mm dick.

Aufgabe der Erfindung ist es, Verfahren zur Herstellung von Führungsleisten anzugeben, die ermöglichen, kostengünstig verschließarme beschichtete Führungsleisten herzustellen.

Diese Aufgabe wird durch die kennzeichnenden Merkmale des Anspruchs 1 und 16 gelöst.

Bei dem Verfahren zur Herstellung der Rohlinge für Führungsleisten wächst die Beschichtung auf dem zuvor in Form des Führungsleisten-Grundkörpers geschliffenen Schneidstoffs aus. Der Schneidstoff ist vorzugsweise ein keramisches Material, es kann jedoch auch ein Hartmetall sein.

Im Vergleich zu den bekannten Verfahren, bei welchen zunächst die Beschichtung als solche hergestellt wird und diese anschließend auf den Grundkörper gelötet wird, wird die Schicht bei dem Verfahren erst an der zu beschichtenden Oberfläche hergestellt.

Der Schichtaufbau geht wahrscheinlich wie folgt vor sich: Die einzelnen abzuscheidenden Teilchen werden sich an der Oberfläche bevorzugt an solchen Oberflächenplätzen anlagern, an welchen sie eine maximale Wechselwirkung zur Umgebung besitzen. Auf die bereits abgeschiedenen Teilchen werden sich wiederum Teilchen abscheiden und zwar wiederum unter dem Gesichtspunkt der maximalen Wechselwirkung oder minimalen potentiellen Energie. Hierdurch wird eine sehr gute Haftung der Beschichtung auf der Oberfläche erzielt.

Wahrscheinlich treten zwischen der Oberfläche des keramischen Materials und der Schicht verschiedenartige Wechselwirkungen Coulomb- und/oder Dipol-Dipol- und/oder Van-der-Waals-Wechselwirkungen sowie chemische Bindungen auf.

Im Vergleich zu den bekannten Verfahren wird eine bessere Haftung der Beschichtung erhalten und zudem entfällt der Bearbeitungsschritt des Auflötens.

Es ist im allgemeinen ausreichend, nur die Fläche(n) des Grundkörpers zu beschichten, die nach dem Einbau in den Messerkopf in Richtung der Bohrungswand weisen. Je nach Beanspruchung kann es ebenfalls ausreichend sein, nur einen Teil dieser in Richtung der Bohrungswand weisenden Fläche(n) des Grundkörpers zu beschichten.

Wie bereits erwähnt, wird der Schneidstoff in Form des Grundkörpers geschliffen. Der Grundkörper hat vorteilhafterweise die Form eines flachen prismatischen Körpers.

Der Schneidstoff wird vorzugsweise mit einer Schleifscheibe aus Hartmetall und/oder Bornitrid und/oder Diamant geschliffen. Besonders gute Ergebnisse werden erzielt, wenn wenigstens die anschließend zu beschichtende Fläche des Grundkörpers mit einem der späteren Beschichtung entsprechenden Schleifmaterial geschliffen oder angeschliffen wird. Soll z.B. eine Diamantschicht auf dem keramischen Material aufgebracht werden, so sollte die zu beschichtende Fläche zuvor mit einer Diamantschleifscheibe geschliffen oder angeschliffen werden.

Das (An)schleifen der zu beschichtenden Oberfläche mit dem Beschichtungsmaterial kann jedoch auch auf andere Weise, beispielsweise in einem Ultraschallbad in einer die jeweiligen Mikrokristalliten umfassenden Suspension erfolgen.

Als keramische Materialien für den Führungsleisten-Grundkörper sind Boride und/oder Nitride und/oder Oxid und/oder Carbide geeignet. Bevorzugt sind Aluminiumoxid, Siliziumnitrid und Siliziumcarbid oder irgendein "Gemisch" derselben. Besonders bevorzugt ist die Verwendung von im wesentlichen reinen Siliziumnitrid.

Die Beschichtung wird auf dem vorbehandelten Grundkörper mittels der bekannten CVD-Verfahren aufgebracht. Ein Übersichtsartikel über verschiedene Methoden zur Herstellung von Diamantschichten befindet sich beispielsweise in Spektrum der Wissenschaft, Seite 30, September 1992.

Es ist übrigens ebenfalls möglich, als Beschichtung dotiertes Bornitrid oder dotierten Diamanten aufzubringen.

Durch die Auswahl der keramischen Materialen und infolge der beschriebenen Verfahren wachsen auf der Oberfläche Schichten der Dicke von mehr als 20 oder gar 30 µm auf. Vorteilhafterweise sollte das Verfahren erst dann beendet werden, wenn auf dem Grundkörper eine Schicht aufgewachsen ist, die die Dicke der späteren Schicht der Führungsleiste übersteigt. Vorzugsweise sollte die Diamant- oder Bornitrid-Schicht des Rohlings wenigstens 20 µm dick sein.

Es ist selbstverständlich ebenfalls möglich, dünnere Schichten aufwachsen zu lassen.

Die durch das Verfahren hergestellte Diamantschicht der Rohlinge weist einen säulenartigen Aufbau auf. Die Längsachsen der Säulen stehen etwa senkrecht auf der Oberfläche des Grundkörpers. Dieser Aufbau der Beschichtung bewirkt die große Druckbeständigkeit der Beschichtung.

Besonders hervorzuheben ist, daß diese Beschichtungen keinen Binder enthalten, der ja bei den bekannten Diamantschichten bei höheren Temperaturen die Zersetzung des Diamatgitters in Graphit katalysiert und dessen Wärmeausdehnungskoeffizient zu den bereits beschriebenen Rissen führt.

Das zweite Verfahren gemäß Anspruch 16 besteht darin, den Führungsleisten-Rohling in die Nut der Einschneiden-Reibahle einzusetzen, ggfs. auswechselbar einzusetzen, und auf Rundmaß zu schleifen.

Dadurch, daß auf dem keramischen Material Schichten solcher Dicke aufwachsen können, wird ermöglicht, die Rohlinge anschließend auf das gewünschte Maß zu schleifen und hierdurch auch Maßschwankungen des Messerkopfes, der Nut im Messerkopf, des Grundkörpers der Führungsleiste und Unebenheiten in der Beschichtung auszugleichen.

Nach dem Schleifen sollte die Diamant- und/oder Bornitridschicht vorzugsweise noch etwa 5 bis 7 µm dick sein.

Bei Führungsleisten, die ja neben der Führung des Werkzeugs ebenfalls dazu dienen, die Oberfläche zu glätten und zu verdichten, ist es besonders wichtig, daß sie von Anfang an nur eine geringe Oberflächenrauhigkeit aufweisen. Dies ist beispielsweise ein wesentlicher Unterschied zu der Messerplatte einer Einschneiden-Reibahle.

Die nach außen weisende Fläche der Führungsleiste sollte auf eine Oberflächenrauhigkeit R_{Z} (das ist die gemittelte Rauhtiefe, die sich als arithmetisches Mittel aus den Einzelrauhtiefen fünf aneinandergrenzender Einzelmeßstrecken nach DIN 4768 berechnet) von höchstens R_{Z} = 2, vorzugsweise 1 ± 50 % und besonders bevorzugt R_{Z} kleiner als 1 geschliffen werden.

Durch die geringe Oberflächenrauhigkeit ist die Reibung gering. Die auf die säulenartige Struktur der Beschichtung wirkende Querkraft, die die Säulenstruktur auf Knickung beansprucht, wird hierdurch vermindert.

Die nach dem Verfahren hergestellten Rohlinge, und natürlich auch die später hieraus hergestellten Führungsleisten sind, da es sich um aufgewachsene Schichten ohne Binder handelt, erheblich temperaturbeständiger als die nach den bekannten Verfahren hergestellten. Dadurch ist es ebenfalls möglich, die Führungsleisten auch zum Trockenreiben einzusetzen, das aufgrund der hohen Reibungswärme die höchsten Ansprüche an die Eigenschaften der zu verwendenden Materialien stellt. Die Einmesser-Reibahlen können zudem mit einer höheren Geschwindigkeit betrieben werden.

Die nach dem Verfahren hergestellten Führungsleisten bewirken, daß die Schneide über lange Zeit besser geführt wird, weil sich die geometrische Lage der Führungsfläche der Führungsleiste nicht ändert und die Schneide ja dann am besten arbeitet, wenn deren Lage richtig definiert ist.

Ein weiterer Vorteil des erfindungsgemäßen Verfahrens besteht darin, daß die Herstellung zudem auch noch kostengünstiger ist.

Aufgrund der Auswechselbarkeit der Führungsleisten kann bei Bedarf ein neuer Rohling in den Messerkopf eingesetzt und wieder auf Rundmaß geschliffen werden.

Die beschriebenen Verfahren können ebenfalls zur Herstellung von Rohlingen und Führungsleisten für Aufbohr- und Feinbohrwerkzeugen angewandt werden. Generell sind die mit Bornitrid beschichteten Führungsleisten insbesondere zur Bearbeitung von eisenhaltigen Werkstoffen und Aluminiumlegierungen geeignet.

Die vorliegende Erfindung wird nun anhand eines Ausführungsbeispiels beschrieben.

Es zeigt:
- Fig. 1:: eine schematische vereinfachte Stirnansicht einer Einmesser-Reibahle in der Bohrung eines Werkstücks,
- Fig. 2:: eine schematische Draufsicht auf einen Rohling gemäß einer Ausgestaltung der Erfindung.

Der allgemeine Aufbau von Einmesser-Reibahlen ist an sich bekannt und braucht daher nicht im Detail dargestellt zu werden. Generell umfaßt eine Einmesser-Reibahle einen Messerkopf 11, in dem eine über die Peripherie vorstehende Messerplatte 12 auswechselbar und vorzugsweise radial justierbar gelagert ist. Der Messerkopf 11 dreht sich relativ zu einem Werkstück 13 in Richtung des Pfeils 14, wobei die Schneide der Messerplatte 12 eine Bohrung 15 bearbeitet. In der Bauart mit zwei Führungsleisten liegt die erste Führungsleiste 16 im ersten Quadranten hinter der Messerplatte 12, zumeist in einer 45° nacheilenden Position, während die zweite Führungsleiste 17 etwa diametral der Messerplatte 12 gegenüber liegt.

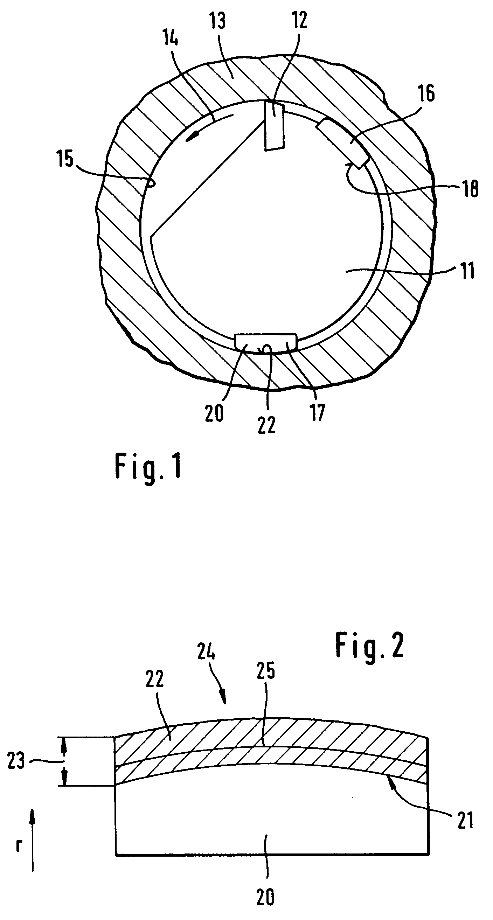

Jede Führungsleiste oder zumindest die Führungsleiste 17, die stellvertretend näher beschrieben und in Fig. 2 dargestellt ist, wird wie folgt hergestellt:
Aus Siliziumnitrid wird durch Schleifen mit einer Diamantschleifscheibe ein Grundkörper 20 von allgemein flach prismatischer Gestalt hergestellt. Der Grundkörper 20 ist so ausgebildet, daß er formschlüssig in der Nut 18 einsetzbar ist. Seine im eingebauten Zustand radial auswärts weisende Fläche 21 ist etwa dem Durchmesser der Bohrung 15 entsprechend gekrümmt. Der Grundkörper weist in Richtung r, in der nachfolgend die Beschichtung aufwächst, bezüglich der späteren Führungsleiste Untermaß auf.

In bekannter Weise wird die Fläche 21 des Grundkörpers 20 anschließend in einer CVD-Anlage beschichtet. Je nachdem, welche Werkstoffe später mit der Reibahle zu bearbeiten sind, wird eine Diamant- oder eine Bornitrid-Beschichtung hergestellt. Bornitrid-Beschichtungen der Führungsleisten sind insbesondere zur Bearbeitung eisenhaltiger Werkstoffe und von Aluminiumlegierungen von Vorteil.

Der Beschichtungsvorgang wird beendet, wenn die Schicht 22 eine Dicke 23 von ca. 30 µm erreicht hat. Der hergestellte Rohling 24 wird nun in die Nut 18 im Messerkopf 11 eingesetzt und auf Rundmaß geschliffen, was schematisch durch die Linie 25 in Fig. 2 angedeutet ist. Die Linie 25 symbolisiert gleichzeitig die Führungsfläche. Die Rauhigkeit der Oberfläche 25 beträgt nach dem Schleifen höchstens R_{Z} = 1 µm. Durch das Abschleifen des eingebauten Rohlings werden zudem Meßungenauigkeiten des Messerkopfs 11, der Nut 18, des Grundkörpers 20 und der Beschichtung 22 ausgeglichen.

## Patentansprüche

1. Verfahren zur Herstellung von Rohlingen für Führungsleisten für Einschneiden-Reibahlen,
dadurch gekennzeichnet,
daß Schneidstoffe in Form des Führungsleisten-Grundkörpers (20) geschliffen und der geschliffene Grundkörper (20) in einer CVD-Anlage wenigstens teilweise mit Diamant und/oder Bornitrid beschichtet wird.

2. Verfahren nach Anspruch 1, dadurch gekennzeichnet, daß der Schneidstoff ein keramisches Material ist.

3. Verfahren nach Anspruch 2, dadurch gekennzeichnet, daß als keramisches Material Borid und/oder Nitrid und/oder Oxid und/oder Carbid verwendet wird.

4. Verfahren nach Anspruch 3, dadurch gekennzeichnet, daß als keramisches Material Siliziumnitrid und/oder Aluminiumoxid und/oder Siliziumcarbid verwendet wird.

5. Verfahren nach Anspruch 4, dadurch gekennzeichnet, daß als keramisches Material Siliziumnitrid verwendet wird.

6. Verfahren nach Anspruch 1, dadurch gekennzeichnet, daß als Schneidstoff ein kobaltfreies Material verwendet wird.

7. Verfahren nach Anspruch 1, dadurch gekennzeichnet, daß der Grundkörper (20) mit einer Hartmetall- und/oder Bornitrid- und/oder Diamantschleifscheibe in Form geschliffen wird.

8. Verfahren nach Anspruch 1, dadurch gekennzeichnet, daß wenigstens die zu beschichtende Fläche(n) (21) des Grundkörpers (20) vor der Beschichtung mit Partikeln des späteren Beschichtungsmaterials angeschliffen und/oder geschliffen wird.

9. Verfahren nach Anspruch 1, dadurch gekennzeichnet, daß die Führungsfläche(n) (21) des Führungsleisten-Grundkörpers (20) wenigstens teilweise beschichtet wird.

10. Verfahren nach Anspruch 1, dadurch gekennzeichnet, daß die gesamte Führungsfläche(n) (21) des Führungsleisten-Grundkörpers (20) beschichtet wird.

11. Verfahren nach Anspruch 1, dadurch gekennzeichnet, daß die Beschichtung so lange erfolgt, bis die Dicke (23) der Beschichtung (22) wenigstens 4 Mikrometer beträgt.

12. Verfahren nach Anspruch 11, dadurch gekennzeichnet, daß die Beschichtung so lange erfolgt, bis die Dicke (23) der Beschichtung (22) wenigstens 10 Mikrometer beträgt.

13. Verfahren nach Anspruch 12, dadurch gekennzeichnet, daß die Beschichtung so lange erfolgt, bis die Dicke (23) der Beschichtung (22) wenigstens 22 Mikrometer beträgt.

14. Verfahren nach Anspruch 13, dadurch gekennzeichnet, daß die Beschichtung so lange erfolgt, bis die Dicke (23) der Beschichtung (22) wenigstens 30 Mikrometer beträgt.

15. Verfahren nach Anspruch 1, dadurch gekennzeichnet, daß bei der Beschichtung kein Binder und/oder kein Kobalt zugegen ist.

16. Verfahren zum Finishen von Einschneiden-Reibahlen, dadurch gekennzeichnet, daß ein mittels CVD beschichteter Rohling (24) in die Nut (18) des Schneidenkopfes (11) eingesetzt und auf Rundmaß geschliffen wird.

17. Verfahren nach Anspruch 16, dadurch gekennzeichnet, daß der Rohling (24) so geschliffen wird, daß seine Oberflächenrauhigkeit höchstens R_{Z} = 2 µm beträgt.

18. Verfahren nach Anspruch 17, dadurch gekennzeichnet, daß der Rohling (24) so geschliffen wird, daß seine Oberflächenrauhigkeit R_{Z} = 1 ± 05 µm beträgt.

19. Verfahren nach Anspruch 17, dadurch gekennzeichnet, daß der Rohling (24) so geschliffen wird, daß seine Oberflächenrauhigkeit höchstens R_{Z} = 1 µm beträgt.

20. Einschneiden-Reibahle mit einer Messerplatte (12) und wenigstens einem eine Führungsleiste (16, 17) aufweisenden Messerkopf (11), welche Führungsleiste aus einem Grundkörper (20) mit einer wenigstens einen Teil einer Führungsfläche (25) der Führungsleiste (17) bildenden Beschichtung (22) besteht, dadurch gekennzeichnet,
daß der Gundkörper (20) aus einem Schneidstoff besteht, die Beschichtung (22) Diamant und/oder kubisches Bornitrid ist und die Beschichtung (22) auf dem Grundkörper (20) mit CVD abgeschieden ist.

21. Führungsleiste für Einschneiden-Reibahlen, Aufbohr- oder Feinbohrwerkzeuge, welche Führungsleiste aus einem Grundkörper (20) mit einer wenigstens einen Teil einer Führungsfläche (25) der Führungsleiste bildenden Beschichtung (22) besteht, dadurch gekennzeichnet,
daß der Gundkörper (20) aus einem Schneidstoff besteht, die Beschichtung (22) Diamant und/oder kubisches Bornitrid ist und die Beschichtung (22) auf dem Grundkörper (20) mit CVD abgeschieden ist.

22. Führungsleiste nach einem oder mehreren der vorhergehenden Ansprüche, dadurch gekennzeichnet, daß der Schneidstoff Siliziumnitrid und/oder Aluminiumoxid und/oder Siliziumcarbid ist.

23. Verwendung von Einschneiden-Reibahlen mit Führungsleisten nach einem oder mehreren der vorhergehenden Ansprüche zum Trockenreiben.
